# FASCICULE DE BREVET EUROPEEN

(11) **EP 3 126 177 B1**
(45) Date de publication et mention de la délivrance du brevet: **15.05.2019**
(21) Numéro de dépôt: 15704037.9
(22) Date de dépôt: 09.01.2015
(51) Int. Cl.: B60K 35/00, B60K 37/04, B60R 11/00, B60R 11/02, G02B 27/01

(54) **DISPOSITIF D'AFFICHAGE POUR VÉHICULE AUTOMOBILE**
ANZEIGEVORRICHTUNG FÜR EIN KRAFTFAHRZEUG
DISPLAY DEVICE FOR A MOTOR VEHICLE

(30) Priorité: 10.01.2014 FR 1450212
(43) Date de publication de la demande: 08.02.2017
(73) Titulaire: Valeo Comfort and Driving Assistance, 94046 Créteil Cedex (FR)
(72) Inventeur: LAFFEYRARIE, Jean-David, F-94046 Creteil Cedex (FR)
(74) Mandataire: Delplanque, Arnaud
(86) Numéro de dépôt international: PCT/FR2015/000008
(87) Numéro de publication internationale: WO 2015/104481

(56) Documents cités:
- EP-A2- 0 818 701
- EP-A2- 1 005 006
- WO-A1-2009/065370
- US-A1- 2003 043 029
- US-A1- 2009 058 761

## Description

L'invention se rapporte à un dispositif d'affichage pour véhicule automobile ainsi qu'à une planche de bord de véhicule automobile comprenant un tel dispositif d'affichage.

Les véhicules automobiles intègrent de plus en plus de fonctions qui ne sont pas directement liées au véhicule automobile lui-même. Typiquement, un grand nombre de véhicules automobiles intègre des fonctionnalités de navigation utilisant la technologie GPS.

Ce type de fonction nécessite un maintien à jour régulier. En effet, ces fonctions intègrent généralement des cartes qui doivent être maintenue à jour régulièrement.

Une grande partie de ces fonctionnalités sont également disponibles via des applications sur les téléphones portables de type « smartphone » ou des tablettes tactiles. Ces dispositifs sont généralement mis à jour de façon plus régulière par les utilisateurs que les dispositifs équivalents dans les véhicules automobiles. Il peut donc être intéressant d'utiliser une partie des fonctions proposées par ces dispositifs dans des véhicules automobiles.

En outre, il existe un besoin de continuité de la connectivité chez les utilisateurs qui souhaitent pouvoir poursuivre l'utilisation de leur smartphone dans leur véhicule.

L'utilisation de téléphones et/ou de tablettes n'est pas sans conséquence sur la sécurité en raison du risque de distraction liée à l'usage de ces dispositifs en conduisant. En effet, la tâche de conduite doit mobiliser l'attention du conducteur, et l'utilisation directe d'un smartphone requiert une attention soutenue et une focalisation sur des contenus trop petits, trop denses, trop éloignés du champ de vision du conducteur. Les manipulations du smartphone, autres que par commandes vocales main libres, sont incompatibles avec la conduite automobile.

Un dispositif comprenant les caractéristiques du préambule de la revendication 1 est connu du document WO 2009/065370 A1.

Ainsi, il existe un besoin pour un dispositif permettant l'utilisation des fonctions intégrées dans un smartphone et/ou une tablette tactile en toute sécurité.

A cet effet, selon un premier aspect, l'invention a pour objet un dispositif d'affichage pour véhicule automobile, le dispositif d'affichage comprenant au moins :
- un support configuré pour recevoir un dispositif portable comprenant un écran d'affichage,
- un premier réflecteur,
- un deuxième réflecteur,
les premier et deuxième réflecteurs sont disposés dans un boitier opaque,
le dispositif d'affichage étant configuré de sorte que l'image formée sur l'écran d'affichage du dispositif portable soit réfléchie par le premier réflecteur en direction du deuxième réflecteur lorsque le dispositif portable est disposé dans le support,
le deuxième réflecteur étant disposé de sorte à réfléchir l'image reçue du premier réflecteur de sorte à être visible par l'utilisateur du dispositif d'affichage.

Grâce au dispositif selon l'invention l'utilisateur peut de manière fiable et sûre visualiser les informations affichées sur l'écran de son téléphone portable ou de sa tablette tactile.

Avantageusement, les premier et deuxième réflecteurs étant disposés dans un boîtier opaque, il est possible même de jour de visualiser l'image formée sur l'écran d'affichage du dispositif portable.

Le dispositif d'affichage selon l'invention peut également comprendre une ou plusieurs des caractéristiques ci-dessous, considérées individuellement ou selon toutes les combinaisons techniquement possibles :
- le support et les deux réflecteurs sont disposés de sorte que l'image virtuelle formée par le deuxième réflecteur et correspondant à l'image formée sur l'écran d'affichage du dispositif portable soit située sous le pare-brise du véhicule automobile ; et/ou
- le support et les deux réflecteurs sont disposés de sorte que l'image virtuelle formée par le deuxième réflecteur et correspondant à l'image formée sur l'écran d'affichage du dispositif portable soit située entre 0,6 m et 1,2 m du conducteur du véhicule automobile ; et/ou
- les réflecteurs ont des coefficients de réflexion d'au moins 90%, par exemple d'au moins 95% ; et/ou
- les réflecteurs sont des miroirs plans ; et/ou
- le deuxième réflecteur est un miroir grossissant ; et/ou
- l'écran d'affichage du dispositif portable est rétro éclairé ; et/ou
- le support est configuré pour recevoir un téléphone portable et/ou une tablette tactile et/ou agenda électronique ; et/ou
- le support comprend un outre un élément de maintien (11) configuré pour maintenir en place le dispositif portable.

L'invention porte également sur une planche de bord d'un véhicule automobile comprenant un dispositif d'affichage selon l'invention.

L'invention sera mieux comprise à la lecture de la description qui va suivre donnée à titre d'exemple non limitatif de mise en oeuvre de celle-ci, et à l'examen de la figure annexée illustrant un dispositif d'affichage selon un mode de réalisation de l'invention.

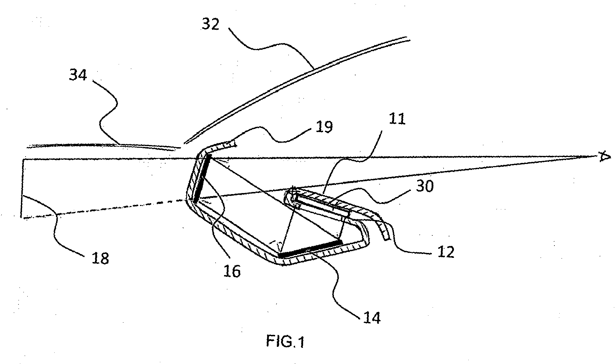

Comme représenté sur la figure 1, le dispositif d'affichage 10 comprend notamment :
- un support 12 configuré pour recevoir un dispositif portable 30 comprenant un écran d'affichage,
- un premier réflecteur 14, et
- un deuxième réflecteur 16.

Le support 12 est configuré pour recevoir le dispositif portable 30 disposé de préférence à plat, l'écran d'affichage dirigé vers le premier réflecteur 14.

Le support 12 peut comprendre un moyen de maintien 11 permettant de maintenir en place le dispositif portable dans le support 12. Par exemple, le support comprend un volet 11 articulé autour d'un axe 111 permettant le maintien du dispositif portable 30.

Le volet 11 est de préférence opaque, réduisant ainsi la lumière parasite dans le dispositif d'affichage.

De préférence pour des raisons de sécurité, le support est configuré pour recevoir le dispositif portable avec l'écran d'affichage vers le bas ou du moins non directement accessible et visible à l'utilisateur pendant la phase de conduite.

Selon un mode de réalisation, le support 12 peut comprendre des moyens d'alimentation permettant d'alimenter le dispositif portable.

Le support 12 peut également comprendre des moyens de calage réglable permettant à l'utilisateur de disposer des dispositifs portables d'affichage de tailles différentes.

Les premier et deuxième réflecteurs sont disposés dans un boitier opaque 20 permettant de contrôler les positions relatives des deux miroirs.

De préférence, la surface interne 22 du boitier opaque est recouverte d'un matériau absorbant la lumière, par exemple un revêtement noir absorbant. Avantageusement, cela permet d'éviter que des rayons lumineux parasites ne viennent perturber l'image réfléchie par les réflecteurs 14 et 16. Les rayons parasites étant des rayon provenant d'autre source lumineuse, naturelle ou artificielle que l'écran d'affichage du dispositif portable. Le dispositif d'affichage est configuré de sorte que lorsque le dispositif portable est disposé dans le support l'image formée sur l'écran d'affichage du dispositif portable 30 soit réfléchie par le premier réflecteur 14 en direction du deuxième réflecteur 16.

Le deuxième réflecteur 16 est disposé de sorte à réfléchir l'image reçue du premier réflecteur de sorte à être visible par l'utilisateur du dispositif d'affichage. Le deuxième réflecteur est configuré de sorte à réfléchir l'image reçue par le premier réflecteur en direction du conducteur du véhicule.

Le dispositif selon l'invention peut également comprendre des moyens de réglages des positions des réflecteurs. Par exemple, le dispositif selon l'invention peut comprendre des molettes mécaniques permettant d'ajuster les positions des réflecteurs offrant ainsi la possibilité d'ajuster la position de l'image renvoyée par le deuxième réflecteur pour chaque utilisateur.

Selon un mode de réalisation, le deuxième réflecteur 16 est disposé de sorte que l'image virtuelle 18 formée par le deuxième réflecteur 16 et correspondant à l'image reçue du premier réflecteur 14 soit située à l'intérieur du véhicule automobile. Par exemple, l'image virtuelle formée par le deuxième réflecteur 16 est situé juste en dessous du pare-brise 32 du véhicule, typiquement sous le capot 34 du véhicule.

De préférence le dispositif selon l'invention est configuré de sorte que l'image virtuelle formée par le deuxième réflecteur apparait sur le fond noir du boitier opaque 30. Avantageusement la luminosité de l'image virtuelle n'est pas contrée par la luminosité extérieure. Ainsi, l'affichage du dispositif portable est visible de jour comme de nuit.

Typiquement à partir d'un smartphone dont la luminance serait d'environ 300 cd/m2, via la réflexion des deux réflecteurs à au moins 90 % de réflectivité, on obtient une image virtuelle d'environ 250 cd/m2. La superposition de l'image virtuelle de 250 cd/m² avec l'éclairage extérieur du véhicule rend cette image virtuelle très difficile à visualiser en plein jour. En configurant, le dispositif d'affichage selon l'invention, en particulier en disposant les deux réflecteurs dans un boitier opaque donc la surface intérieure est recouverte d'un matériaux absorbant, on augmente la visibilité de ladite image virtuelle.

Avantageusement, le dispositif d'affichage selon l'invention comprend deux réflecteurs permettant ainsi de retrouver une image de l'écran d'affichage du dispositif portable à l'endroit. Une solution ne comptant qu'un seul réflecteur miroir, utilisant une réflexion dans le pare-brise, fournirait à l'utilisateur final une image retournée de l'écran du dispositif portable.

Dans le mode de réalisation de la figure 1 et compte tenu du chemin optique, pour obtenir une image non modifiée, il convient de disposer le dispositif portable de façon à ce que le haut de l'écran d'affichage soit au plus près du conducteur.

De préférence, le support 12 et les deux réflecteurs 14, 16 sont disposés de sorte que l'image virtuelle 18 formée par le deuxième réflecteur 16 soit située entre 0,6 mètre et 1,2 mètres du conducteur du véhicule automobile.

Ainsi l'effort d'accommodation du conducteur est réduit et sa fatigue diminue lorsqu'il regarde fréquemment alternativement la route à l'infini et l'image virtuelle de l'écran d'affichage du dispositif portable.

Typiquement, le temps d'accommodation est approximativement de 2 secondes lorsque le regard passe de la route à un combiné d'instrumentation. On peut estimer que le dispositif selon l'invention permet de réduire ce temps à environ 1 seconde lorsque le regard passe de la route à l'image virtuelle 18.

Comme représenté sur la figure 1, le dispositif d'affichage selon l'invention peut comprendre en outre un cache ou une casquette 19 disposée de sorte à limiter les rayons lumineux venant de l'extérieur, en particulier du pare-brise 32, et pouvant pénétrer dans le dispositif d'affichage. Avantageusement, la présence d'une telle casquette 19 limite les effets de réflexions parasites sur les réflecteurs.

En outre, le dispositif d'affichage peut être fermé au moyen d'un vitrage antireflet 24. Le dispositif d'affichage étant configuré de sorte que l'image virtuelle 18 formée par le deuxième réflecteur 16 soit visible par l'utilisateur à travers ce vitrage antireflet 24.

Avantageusement, le vitrage antireflet permet de protéger les réflecteurs des objets extérieurs et de limiter le nombre de rayons lumineux parasites pouvant pénétrer le boitier opaque et se réfléchir sur l'un des réflecteurs.

Selon un mode de réalisation, les premier et deuxième réflecteurs sont des miroirs plans. Avantageusement, l'utilisation de miroirs plans est non seulement peu couteuse, mais permet également une grande tolérance sur le positionnement du dispositif portable dans le support.

Selon un mode de réalisation, le deuxième réflecteur peut être un miroir de grossissement, par exemple un miroir sphérique. Avantageusement, l'utilisation d'un miroir sphérique permet de former une image virtuelle 18 plus grande que la taille de l'écran d'affichage du dispositif portable.

Selon la disposition des miroirs et leurs dispositions relatives, il est possible d'ajuster l'encombrement du dispositif d'affichage en fonction des contraintes d'encombrement de la planche de bord.

Pour limiter l'encombrement du dispositif d'affichage, il convient de rapprocher les réflecteurs. Cependant pour obtenir une image virtuelle plus éloignée et réduire le temps d'accommodation du conducteur, il convient d'éloigner les réflecteurs.

En outre, le chemin optique entre l'écran d'affichage, du dispositif portable et l'utilisateur doit être complètement dégagé. Il convient donc de concevoir conjointement les éléments de planche de bord (traverse, conduits, faisceaux), et le chemin optique, de façon à optimiser l'ensemble en fonction des attendus de l'utilisateur en particulier pour ce qui est de la distance de l'image virtuelle, la verticalité de l'image virtuelle et/ou l'agrandissement.

Le dispositif d'affichage selon l'invention est de préférence implanté dans la zone centrale de la planche de bord, pour tenir compte de son volume d'encombrement et afin d'accéder aisément au dispositif portable. Dans ce cas le dispositif sera orienté de façon à tenir compte de l'angle nécessaire pour attendre l'oeil du conducteur depuis le centre du véhicule.

Si l'implantation de la planche de bord le permet, le dispositif pourra être installé dans l'axe du conducteur.

Selon un aspect de l'invention, le dispositif portable est configuré pour permettre de contrôler les applications dudit dispositif depuis les commandes du véhicule.

Typiquement, les actions sur le dispositif portable se font par exemple au moyen de commande au volant, via un lien Bluetooth. L'utilisateur interagit avec le dispositif portable au moyen de commandes adaptées à l'usage automobile.

Bien entendu, l'invention ne se limite pas aux modes de réalisation décrits et s'étend à d'autres variantes dans la portée des revendications.

## Revendications

1. Dispositif d'affichage (10) pour véhicule automobile, le dispositif d'affichage comprenant au moins :
- un support (12) configuré pour recevoir un dispositif portable (30) comprenant un écran d'affichage,
- un premier réflecteur (14),
- un deuxième réflecteur (16),
le dispositif d'affichage étant configuré de sorte que l'image formée sur l'écran d'affichage du dispositif portable soit réfléchie par le premier réflecteur en direction du deuxième réflecteur lorsque le dispositif portable est disposé dans le support,
le deuxième réflecteur étant disposé de sorte à réfléchir l'image reçue du premier réflecteur de sorte à être visible par le conducteur, **caractérisé en ce que** les premier et deuxième réflecteurs (14, 16) sont disposés dans un boîtier opaque (20) et **en ce que** le deuxième réflecteur (16) est configuré de sorte à réfléchir l'image reçue par le premier réflecteur (14) en direction du conducteur du véhicule.

2. Dispositif selon la revendication 1, dans lequel le support et les deux réflecteurs sont disposés de sorte que l'image virtuelle formée par le deuxième réflecteur et correspondant à l'image formée sur l'écran d'affichage du dispositif portable soit située sous le pare-brise (32) du véhicule automobile.

3. Dispositif selon la revendication 2, dans lequel le support et les deux réflecteurs sont disposés de sorte que l'image virtuelle formée par le deuxième réflecteur et correspondant à l'image formée sur l'écran d'affichage du dispositif portable soit située entre 0,6 m et 1,2 m du conducteur du véhicule automobile.

4. Dispositif selon l'une des revendications précédentes dans lequel les réflecteurs ont des coefficients de réflexion d'au moins 90%.

5. Dispositif selon l'une des revendications précédentes dans lequel les réflecteurs sont des miroirs plans.

6. Dispositif selon l'une des revendications 1 à 4, dans lequel le deuxième réflecteur est un miroir grossissant.

7. Dispositif selon l'une des revendications précédentes dans lequel l'écran d'affichage du dispositif portable est rétro éclairé.

8. Dispositif selon l'une des revendications précédentes dans lequel le support est configuré pour recevoir un téléphone portable et/ou une tablette tactile et/ou agenda électronique.

9. Dispositif selon l'une des revendications précédentes dans lequel le support comprend un outre un élément de maintien (11) configuré pour maintenir en place le dispositif portable.

10. Planche de bord d'un véhicule automobile comprenant un dispositif d'affichage selon l'une des revendications précédentes.

## Patentansprüche

1. Anzeigevorrichtung (10) für ein Kraftfahrzeug, wobei die Anzeigevorrichtung wenigstens umfasst:
- einen Träger (12), der dafür ausgebildet ist, eine tragbare Vorrichtung (30) aufzunehmen, die einen Anzeigebildschirm umfasst,
- einen ersten Reflektor (14),
- einen zweiten Reflektor (16),
wobei die Anzeigevorrichtung derart gestaltet ist, dass das auf dem Anzeigebildschirm der tragbaren Vorrichtung gebildete Bild durch den ersten Reflektor in Richtung des zweiten Reflektors reflektiert wird, wenn die tragbare Vorrichtung in dem Träger angeordnet ist,
wobei der zweite Reflektor derart angeordnet ist, dass er das Bild, das er vom ersten Reflektor empfängt, derart reflektiert, dass es für den Fahrer sichtbar ist,
**dadurch gekennzeichnet, dass** der erste und der zweite Reflektor (14, 16) in einem undurchsichtigen Gehäuse (20) angeordnet sind, und dadurch, dass der zweite Reflektor (16) derart gestaltet ist, dass er das durch den ersten Reflektor (14) empfangene Bild in Richtung des Fahrers des Fahrzeugs reflektiert.

2. Vorrichtung nach Anspruch 1, wobei der Träger und die zwei Reflektoren derart angeordnet sind, dass sich das virtuelle Bild, das durch den zweiten Reflektor gebildet wird und dem auf dem Anzeigebildschirm der tragbaren Vorrichtung gebildeten Bild entspricht, unter der Windschutzscheibe (32) des Kraftfahrzeugs befindet.

3. Vorrichtung nach Anspruch 2, wobei der Träger und die zwei Reflektoren derart angeordnet sind, dass das virtuelle Bild, das durch den zweiten Reflektor gebildet wird und dem auf dem Anzeigebildschirm der tragbaren Vorrichtung gebildeten Bild entspricht, 0,6 m bis 1,2 m vom Fahrer des Kraftfahrzeugs entfernt ist.

4. Vorrichtung nach einem der vorhergehenden Ansprüche, wobei die Reflektoren Reflexionskoeffizienten von mindestens 90 % aufweisen.

5. Vorrichtung nach einem der vorhergehenden Ansprüche, wobei die Reflektoren ebene Spiegel sind.

6. Vorrichtung nach einem der Ansprüche 1 bis 4, wobei der zweite Reflektor ein Vergrößerungsspiegel ist.

7. Vorrichtung nach einem der vorhergehenden Ansprüche, wobei der Anzeigebildschirm der tragbaren Vorrichtung hintergrundbeleuchtet ist.

8. Vorrichtung nach einem der vorhergehenden Ansprüche, wobei der Träger dafür ausgebildet ist, ein Mobiltelefon und/oder einen Tabletcomputer und/oder einen elektronischen Terminplaner aufzunehmen.

9. Vorrichtung nach einem der vorhergehenden Ansprüche, wobei der Träger außerdem ein Halteelement (11) umfasst, das dafür ausgelegt ist, die tragbare Vorrichtung festzuhalten.

10. Armaturenbrett eines Kraftfahrzeugs, das eine Anzeigevorrichtung nach einem der vorhergehenden Ansprüche umfasst.

## Claims

1. Motor-vehicle display device (10), the display device comprising at least:
- a holder (12) configured to receive a portable device (30) comprising a display screen,
- a first reflector (14), and
- a second reflector (16),
the display device being configured so that the image formed on the display screen of the portable device is reflected by the first reflector in the direction of the second reflector when the portable device is placed in the holder,
the second reflector being placed so as to reflect the image received from the first reflector so that it is visible to the driver, **characterized in that** the first and second reflectors (14, 16) are placed in an opaque casing (20) and **in that** the second reflector (16) is configured so as to reflect the image received by the first reflector (14) in the direction of the driver of the vehicle.

2. Device according to Claim 1, wherein the holder and the two reflectors are placed so that the virtual image formed by the second reflector and corresponding to the image formed on the display screen of the portable device is located under the windshield (32) of the motor vehicle.

3. Device according to Claim 2, wherein the holder and the two reflectors are placed so that the virtual image formed by the second reflector and corresponding to the image formed on the display screen of the portable device is located between 0.6 m and 1.2 m from the driver of the motor vehicle.

4. Device according to one of the preceding claims, wherein the reflectors have reflection coefficients of at least 90%.

5. Device according to one of the preceding claims, wherein the reflectors are planar mirrors.

6. Device according to one of Claims 1 to 4, wherein the second reflector is a magnifying mirror.

7. Device according to one of the preceding claims, wherein the display screen of the portable device is backlit.

8. Device according to one of the preceding claims, wherein the holder is configured to receive a mobile telephone and/or a tablet computer and/or personal digital assistant.

9. Device according to one of the preceding claims, wherein the holder furthermore comprises a holding element (11) configured to hold the portable device in place.

10. Dashboard of a motor vehicle comprising a display device according to one of the preceding claims.
